# FASCICULE DE BREVET EUROPEEN

(11) **EP 1 167 171 B1**
(45) Date de publication et mention de la délivrance du brevet: **14.12.2005**
(21) Numéro de dépôt: 01401699.2
(22) Date de dépôt: 26.06.2001
(51) Int. Cl.: B62K 3/00, B62K 3/16, A63C 17/28, B62K 15/00

(54) **Véhicule roulant à propulsion pédestre**
Fusskraftbetriebenes Radfahrzeug
Foot operated rolling vehicle

(30) Priorité: 30.06.2000 FR 0008530
(43) Date de publication de la demande: 02.01.2002
(73) Titulaire: Ducourret, Paul, 78600 Maisons-Lafitte (FR)
(72) Inventeur: Ducourret, Paul, 78600 Maisons-Lafitte (FR)
(74) Mandataire: Blot, Philippe Robert Emile

(56) Documents cités:
- EP-A- 0 134 537
- EP-A- 0 687 620
- BE-A- 828 985
- DE-A- 3 704 672
- DE-C- 649 433
- DE-U- 29 517 576
- FR-A- 2 467 003
- FR-A- 2 771 068
- US-A- 1 658 068
- US-A- 5 050 864

## Description

L'invention concerne les véhicules roulants adaptés pour être mus par l'action des pieds de leur utilisateur sur le sol, et consiste plus précisément en un véhicule comportant une ossature montée sur des roues dont au moins l'une est orientable pour être directrice, cette ossature portant une selle adaptée pour supporter le tronc de l'utilisateur tandis que cet utilisateur effectue au moyen de ses pieds des mouvements de propulsion sur le sol. Le document DE-U-295 17 576 décrit un véhicule roulant selon le préambule de la revendication 1.

Les véhicules roulants de ce type, existant autrefois sous le nom de draisiennes, étaient de relativement grandes dimensions du fait qu'ils présentaient généralement des roues de grand diamètre, et que la roue avant était solidarisée à une colonne s'étendant vers le haut, surmontée d'un guidon de commande de direction.

De tels véhicules, lorsqu'ils ne sont pas utilisés, sont difficilement transportables soit par leur utilisateur alors piéton, soit dans le coffre à bagages ou l'habitacle d'un véhicule automobile classique de tourisme.

L'invention a pour but de remédier à ces inconvénients et concerne à cette fin un véhicule roulant adapté pour pouvoir être mu par une action pédestre d'un utilisateur s'apparentant à un mouvement de marche ou de course des pieds de l'utilisateur sur le sol, comportant deux roues dont au moins l'une est orientable pour être directrice, une selle d'appui pour l'utilisateur, un unique organe manuel de commande de direction constitué par un faux guidon, et une ossature comprenant un longeron monté sur les roues et une colonne portant la selle, véhicule caractérisé en ce que la colonne portant la selle porte également le faux guidon et est repliable contre le longeron.

Grâce à ces caractéristiques, le véhicule présente un faible encombrement et une structure bien adaptée pour être réalisée en différentes versions et notamment sous forme pliante.

Le véhicule peut en outre présenter une ou plusieurs des caractéristiques suivantes :
- la roue directrice est libre de s'orienter autour d'un axe dont l'intersection avec le sol est située en avant de la zone de contact de la roue avec celui-ci, ce qui permet de modifier l'orientation de la roue par inclinaison transversale du véhicule au moyen par exemple du faux guidon ;
- la roue directrice est libre de s'orienter autour d'un axe incliné vers l'arrière en allant vers le sol de manière que la roue tende à revenir d'elle-même en alignement avec le longeron, le retour dans cette position d'alignement tendant à abaisser l'avant du véhicule ;
- la colonne d'ossature portant la selle et le faux guidon est solidarisée au longeron par des moyens d'articulation verrouillables en position dans au moins une position d'utilisation dans laquelle la colonne est déployée et une position dans laquelle elle est repliée approximativement parallèlement au longeron ;
- le faux guidon comporte une potence s'étendant vers l'avant du véhicule et portant deux branches s'étendant latéralement de part et d'autre de la potence ;
- la potence est solidarisée à la colonne d'ossature par des moyens comprenant des moyens d'articulation verrouillables en position dans au moins une position d'utilisation dans laquelle la potence est déployée et une position dans laquelle elle est repliée parallèlement à la colonne d'ossature ;
- les branches sont reliées à la potence par des moyens d'articulation verrouillables en position dans au moins une position d'utilisation dans laquelle elles sont déployées et une position dans laquelle elles sont repliées contre la potence ;
- l'ossature comporte une plaque repose-pieds ;
- il comporte une roue avant directrice et une roue arrière ;
- il comporte des moyens supports de charges pour supporter en outre une charge à transporter ; et
- il comporte un dispositif d'affichage comprenant au moins un panneau d'affichage.

D'autres caractéristiques et avantages de l'invention ressortiront de la description qui va suivre, de formes de réalisation de l'invention données à titre d'exemples non limitatifs et illustrées par les dessins joints dans lesquels :
- la figure 1 est une vue schématique de côté d'une première forme de réalisation d'un véhicule selon l'invention en position d'utilisation ;
- la figure 2 est une vue schématique de dessus du véhicule de la figure 1 ;
- la figure 3 est une vue schématique de côté du véhicule de la figure 1 représenté replié ;
- la figure 4 est une vue schématique en perspective d'une variante d'un dispositif de commande de freinage pouvant équiper le véhicule des figures 1 à 3 ;
- la figure 5 est une vue schématique de côté d'une deuxième forme de réalisation d'un véhicule selon l'invention adaptée pour transporter en outre des charges ;
- la figure 6 est une vue schématique de dessus du véhicule de la figure 5 ;
- la figure 7 est une vue schématique de côté d'une troisième forme de réalisation d'un véhicule selon l'invention de très petites dimensions, adaptée pour une utilisation essentiellement urbaine comme les trottinettes ;
- la figure 8 est une vue schématique de côté du véhicule de la figure 7 représenté replié ; et
- la figure 9 est une vue schématique en perspective d'une quatrième forme de réalisation, simplifiée, d'un véhicule selon l'invention adaptée pour une utilisation urbaine gratuite financée par la publicité.

Le véhicule représenté sur les dessins est un véhicule pour le transport d'un utilisateur individuel, adapté pour être mu par une action de marche ou de course des deux pieds de l'utilisateur sur le sol ; il comporte une ossature 1 montée sur des roues 2,3, respectivement avant et arrière en prenant pour référence le sens de déplacement normal du véhicule (flèche F), la roue avant ou les roues avant 2 étant librement orientables autour d'un axe A respectif pour être directrices, l'intersection de l'axe A avec le sol étant en avant de la zone de contact de la roue avec celui-ci.

L'ossature 1 et plus précisément une colonne d'ossature 11,12 porte une selle 4 d'appui pour l'utilisateur, à un niveau tel que l'utilisateur en position assise ou tout au moins en appui sur la selle puisse alors propulser le véhicule par une action pédestre sur le sol, plus précisément par un mouvement alternatif d'appui et de poussée des pieds sur le sol vers l'arrière, similaire au mouvement de l'utilisateur d'une draisienne.

L'ossature 1 porte également un unique organe manuel de commande de direction accessible par cet utilisateur lorsque celui-ci est en appui sur la selle, en position assise ou non ; contrairement au cas d'une draisienne ou d'une trottinette, cet organe de commande de direction n'est pas un guidon fixé à une colonne pivotante d'ossature à laquelle est fixée une fourche d'ossature solidarisée à la roue directrice de telle sorte qu'une action de l'utilisateur sur le guidon provoquant un pivotement de la colonne entraîne une modification d'orientation de la roue, mais consiste en un organe qui sera appelé dans la suite « faux guidon » 5 fixé à une colonne d'ossature et immobilisé par rapport à elle lorsque l'utilisateur est en appui sur la selle en position assise ou non et le véhicule est en cours d'utilisation.

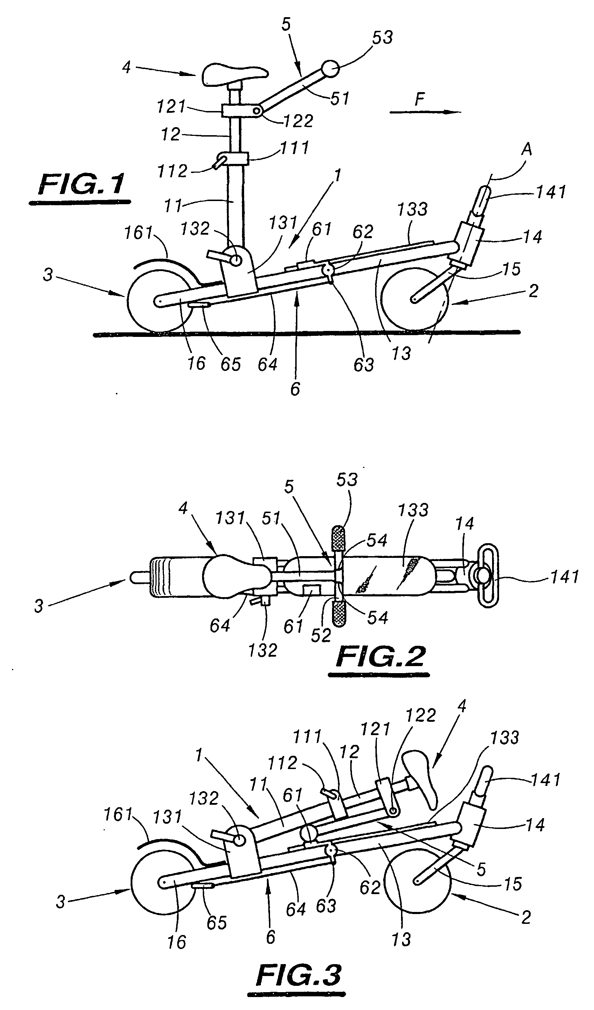

Selon la forme de réalisation à deux roues représentée sur les figures 1 à 3, la selle 4 et le faux guidon 5 sont portés par une même colonne d'ossature comportant un tronçon de base tubulaire 11 et un tronçon supérieur constitué par une tige 12 pouvant être également tubulaire emboîtée de manière coulissante dans le tronçon de base pour pouvoir être réglée et bloquée en hauteur de manière que l'utilisateur puisse ajuster le niveau de la selle fixée au sommet de la tige 12 à sa convenance pour trouver la meilleure position lui permettant de propulser le véhicule. Pour bloquer la tige 12 dans le tronçon de base 11, ce dernier peut par exemple présenter à sa partie supérieure une fente longitudinale et comporter autour de sa partie fendue une chape 111 dont les ailes peuvent être resserrées au moyen d'une manette filetée 112.

Le faux guidon est lui-même réglable en hauteur par le fait qu'il est porté par la tige 12 d'ossature par l'intermédiaire d'un collier également constitué par une chape 121 munie d'un organe de serrage 122 ; après réglage et fixation du faux guidon sur la tige 12, sa hauteur suit le réglage en hauteur de la selle.

L'ossature 1 comporte également un longeron 13 en un ou plusieurs tronçons pouvant être tubulaire(s) ou une structure en tôle ou en matériau synthétique, une colonne de direction 14 soudée au longeron 13 et s'étendant le long de l'axe A, une fourche avant solidarisée à une roue directrice 2 et montée mobile et libre en rotation dans la colonne de direction 14 autour de l'axe A, et une fourche arrière 16 fixe soudée au longeron 13 ou à ressort et solidarisée à une roue arrière 3.

L'axe A est de préférence incliné vers l'arrière du véhicule en allant vers le sol, par rapport à la verticale. En outre, la fourche avant 15 est inclinée vers l'arrière du véhicule en allant vers le sol par rapport à l'axe A.

La colonne 11, 12 est solidarisée au longeron 13 par des moyens d'articulation verrouillables comprenant une chape 131 fixée au longeron et une cheville d'articulation 132 traversant les ailes de la chape, sur laquelle la colonne est articulée, et comportant une manette de serrage; les faces intérieures des ailes de la chape peuvent comporter des crans d'orientation de la colonne définissant plusieurs positions de verrouillage, par exemple une position d'utilisation du véhicule dans laquelle la colonne est déployée vers le haut approximativement perpendiculairement au longeron (figures 1 et 2) et une position dans laquelle elle est repliée approximativement parallèlement au longeron (figure 3). Grâce au fait que la colonne est articulée au voisinage de sa base, au longeron, il est possible de la replier pratiquement parallèlement à celui-ci à proximité immédiate de lui, ce qui permet d'obtenir alors un faible encombrement.

Le faux guidon constituant l'organe de commande de direction est réalisé en plusieurs pièces comprenant une potence 51 s'étendant vers l'avant du véhicule et articulée comme on l'a vu à la colonne 11, 12 et plus précisément à la tige d'ossature 12 par l'intermédiaire d'une chape 121 et d'un organe de serrage 122, portant elle-même deux branches 52 s'étendant de part et d'autre d'elle, munies chacune d'une poignée d'extrémité 53. La chape 121 et l'organe de serrage 122 permettent ainsi de verrouiller la potence 51 en position, dans au moins une position d'utilisation dans laquelle elle est déployée vers l'avant et légèrement vers le haut, et une position dans laquelle elle est repliée approximativement parallèlement à la colonne 11, 12, très près de celle-ci. Les branches 52 sont elles-mêmes reliées à la potence par des moyens d'articulation 54 par exemple à rotule, verrouillables en position dans au moins une position d'utilisation dans laquelle les branches sont déployées latéralement et une position dans laquelle elles sont repliées contre la potence.

Afin de faciliter le transport du véhicule à la main lorsqu'il n'est plus en utilisation et est en position repliée (colonne 11, 12, potence 51, branches latérales de faux guidon 52), l'extrémité de la colonne de direction 14 opposée à la fourche est munie d'une poignée de préhension 141.

Afin que lors de l'utilisation du véhicule par exemple dans une pente inclinée vers le bas, l'utilisateur puisse se reposer, le longeron 13 est muni d'une plaque repose-pieds 133 servant également de garde-boue de roue avant.

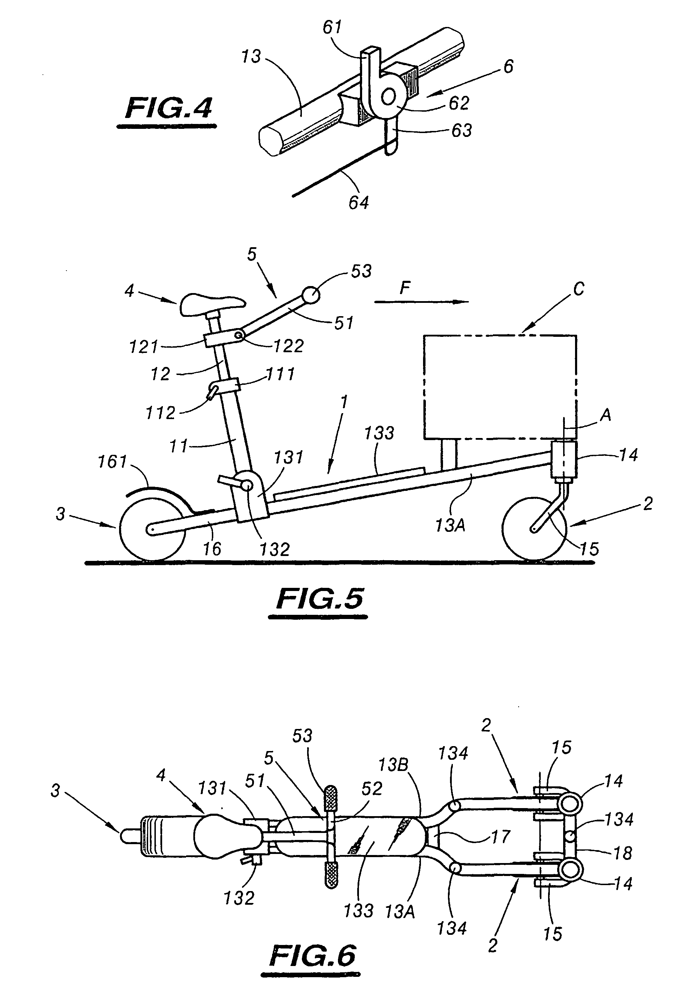

Afin que l'utilisateur puisse, en cas de besoin et notamment lors de l'utilisation dans une pente inclinée vers le bas, ralentir le véhicule, celui-ci comporte un dispositif de freinage 6 (figures 1 à 3, et variante figure 4) de préférence à commande par pédale ; la pédale 61 peut être solidaire d'un pédalier 62 articulé au longeron 13 et portant un levier 63 auquel est accrochée une extrémité d'un câble de tirage 64 dont l'extrémité opposée est accrochée à un frein 65 en ciseaux ou à tirage central.

La fourche arrière 16 porte un garde-boue 161 de roue arrière.

Sur les figures 5 à 9, qui montrent des variantes de réalisation du véhicule des figures 1 à 3, les éléments correspondant à des éléments représentés sur les figures 1 à 3 sont désignés par les mêmes repères numériques ; ces formes de réalisation ne seront pas décrites en détail, et seules leurs principales particularités seront mentionnées.

Le véhicule schématisé sur les figures 5 et 6, destiné à transporter en outre une charge C, est ici un véhicule à trois roues. Il s'agit comme le précédent d'un véhicule repliable comportant une ossature comprenant une colonne comportant un tronçon de base 11 dans lequel une tige 12 est montée coulissante, pour porter la selle 4 et le faux guidon 5. Pour simplifier le dessin, le dispositif de freinage n'est pas représenté. Le longeron 4 comporte deux tubes 13A, 13B parallèles situés au voisinage l'un de l'autre sous le repose-pieds 133, coudés et contre-coudés en avant de celui-ci de manière qu'à l'avant du véhicule ils soient, tout en restant parallèles, plus écartés l'un de l'autre que sous le repose-pieds ; à leur extrémité avant, les tubes 13A, 13B comportent chacun une colonne de direction 14 et une fourche 15 montée pivotante par rapport à cette colonne autour de l'axe A le long duquel s'étend celle-ci, fourche au moyen de laquelle la colonne de direction 14 est reliée à une roue directrice 2. Ce véhicule comporte donc deux roues avant directrices 2 au dessus desquelles il est possible de placer la charge en position basse grâce à l'absence de guidon et de colonne de guidon, et une roue arrière 3. L'ossature comporte deux traverses de rigidification 17, 18 reliant les tubes 13A, 13B d'ossature respectivement dans la partie avant de la région dans laquelle ils sont plus rapprochés et dans la partie avant de la région dans laquelle ils sont plus écartés. Des appuis 134 sont prévus pour supporter la charge à transporter, par exemple trois appuis constitués chacun par un plot cylindrique ; ici, un plot est prévu au milieu de la traverse avant, et un plot est prévu sur chacun des tubes 13A, 13B, en arrière du plot de la traverse avant, dans la partie arrière de la région dans laquelle les tubes sont plus écartés, afin que le polygone de sustentation de la charge soit le plus long et le plus large possible. Il est également possible d'équiper un véhicule à deux roues de moyens comprenant par exemple un plateau de telle manière qu'il puisse porter une charge au dessus de sa roue avant.

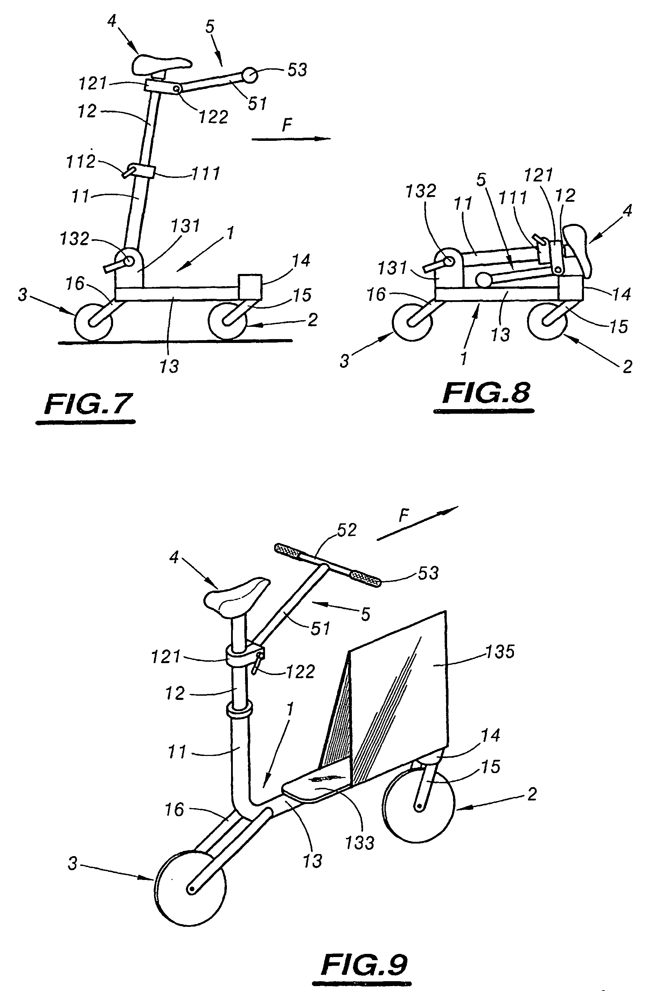

Le véhicule schématisé sur les figures 7 et 8 est un véhicule à deux roues à longeron 13 court comportant une roue avant directrice 2 et une roue arrière 3 toutes deux de petit diamètre, permettant de circuler aisément dans la foule. Compte tenu du raccourcissement du longeron 3, la longueur de la colonne 11, 12 devient significative lorsqu'elle est repliée, et il est alors utile de mettre à profit la grande course de réglage en hauteur de la selle pour rétracter la tige 12 dans le tronçon de base 11 afin de réduire la longueur totale (figure 8).

Le véhicule à deux roues schématisé sur la figure 9 comporte une ossature 1 comprenant en une seule pièce le longeron 13 et le tronçon inférieur de base 11 de la colonne portant la selle et le faux guidon ; le repose-pieds 133 porte un dispositif d'affichage 135 ici constitué de deux panneaux inclinés dont les chants inférieurs, écartés l'un de l'autre, sont fixés au repose-pieds et dont les chants supérieurs sont rapprochés de telle sorte que ces deux panneaux forment un angle dièdre présentant une section transversale en V inversé. Un tel véhicule peut être mis à la disposition du public gratuitement, par exemple en échange d'une pièce de monnaie, par des collectivités locales telles que des municipalités, pour être utilisé à l'intérieur d'un périmètre urbain déterminé, le financement de l'opération étant assuré partiellement par la publicité dans l'hypothèse où les panneaux du dispositif 135 sont des panneaux publicitaires. Là encore, le dispositif d'affichage peut être placé en position basse au dessus des roues avant grâce à l'absence de guidon et de colonne de guidon.

Bien entendu, l'invention n'est pas limitée aux formes de réalisation ci-dessus décrites et représentées, et on peut en prévoir d'autres sans sortir de son cadre ; on peut notamment prévoir des véhicules selon l'invention munis en outre d'une béquille de stabilisation en stationnement, articulée à l'ossature, ou/et de tels véhicules comportant un moteur auxiliaire de préférence électrique relié mécaniquement à une roue, par exemple la roue arrière, pour entraîner cette roue en rotation ; il est également possible de prévoir des roues de grand diamètre pour effectuer de longues promenades ou pour organiser des courses de vitesse.

Dans tous les cas, ce véhicule est propulsé par un mouvement alternatif des deux pieds de l'utilisateur sur le sol, s'apparentant à la marche ou la course à pied. Il est ainsi possible de marcher ou de courir sans que le corps pèse sur les jambes, et d'aller sans fatigue et sans grand danger à la vitesse d'un coureur à pied en profitant en outre des « descentes » pour se reposer, pieds sur le repose-pieds.

Pour faire tourner le véhicule, on peut exercer un effort sur le faux guidon 5 pour l'orienter par rapport à la direction de la marche des jambes, ce qui entraîne la rotation de la fourche avant ou des fourches avant 15 de la même manière que celles des roues directrices des chariots de supermarché ; plus particulièrement avec la version à deux roues, de manière plus ludique (et indispensable dans une descente libre avec les pieds sur le repose-pieds), on peut appuyer sur l'extrémité de la branche 52 du faux guidon située du côté vers lequel on désire tourner, pour incliner le véhicule transversalement, ce qui entraîne la rotation de la fourche avant 15 en raison de la poussée latérale produite sur un côté de la roue avant 2, grâce au fait que l'intersection de l'axe de pivotement A de la fourche avant avec le sol est en avant du point de contact de la roue avec celui-ci ; grâce au sens d'inclinaison de l'axe de pivotement A, la roue 2 tend ensuite à revenir d'elle-même en alignement avec le longeron 13 et la roue arrière fixe 3, car le retour de la roue dans cette position d'alignement tend à abaisser l'avant du véhicule; en outre, la possibilité d'inclinaison transversale apporte dans les virages une meilleure stabilité et un meilleur confort.

L'apprentissage de la conduite du véhicule est donc aisé à tout âge ; le véhicule est plus facile à enfourcher qu'une bicyclette, la selle étant située plus bas ; il est en outre plus maniable et d'une utilisation moins fatigante qu'une bicyclette, le mouvement de marche étant plus naturel que le mouvement rotatif des pieds sur des pédales.

Ce véhicule offre de plus la possibilité de faire de très grands pas ce qui entraîne une sensation agréable de légèreté, une seule poussée d'un seul pied propulsant le véhicule sur plusieurs mètres.

Le véhicule est en outre léger, facile à plier notamment par suite de la suppression du guidon conventionnel et de sa colonne support et de la conception du freinage par un frein à pied, peu encombrant surtout après pliage (il peut être transporté dans une automobile ou dans les véhicules de transport en commun, et rangé dans un appartement), et peu coûteux à fabriquer et à entretenir par suite de sa simplicité mécanique.

## Revendications

1. Véhicule roulant adapté pour pouvoir être mû par une action pédestre d'un utilisateur s'apparentant à un mouvement de marche ou de course des pieds de l'utilisateur sur le sol, comportant deux roues (2, 3) dont au moins l'une est orientable pour être directrice, une selle (4) d'appui pour l'utilisateur, un unique organe manuel de commande de direction (5) constitué par un faux guidon, et une ossature comprenant un longeron (13) monté sur les roues et une colonne (11, 12) portant la selle, véhicule **caractérisé en ce que** la colonne (11, 12) portant la selle porte également le faux guidon et est repliable contre le longeron (13).

2. Véhicule selon la revendication 1, **caractérisé en ce que** la roue directrice (2) est libre de s'orienter autour d'un axe (A) dont l'intersection avec le sol est située en avant de la zone de contact de la roue (2) avec celui-ci, ce qui permet de modifier l'orientation de la roue par inclinaison transversale du véhicule au moyen par exemple du faux guidon (5).

3. Véhicule selon l'une quelconque des revendications 1 et 2, **caractérisé en ce que** la roue directrice (2) est libre de s'orienter autour d'un axe (A) incliné vers l'arrière en allant vers le sol de manière que la roue (2) tende à revenir d'elle-même en alignement avec le longeron (13), le retour dans cette position d'alignement tendant à abaisser l'avant du véhicule.

4. Véhicule selon l'une quelconque des revendications 1 à 3, **caractérisé en ce que** la colonne (11, 12) d'ossature portant la selle (4) et le faux guidon (5) est solidarisée au longeron par des moyens d'articulation (131, 132) verrouillables en position dans au moins une position d'utilisation dans laquelle la colonne est déployée et une position dans laquelle elle est repliée approximativement parallèlement au longeron.

5. Véhicule selon l'une quelconque des revendications 1 à 4, **caractérisé en ce que** le faux guidon (5) comporte une potence (51) s'étendant vers l'avant du véhicule et portant deux branches (52) s'étendant latéralement de part et d'autre de la potence.

6. Véhicule selon la revendication 5, **caractérisé en ce que** la potence (51) est solidarisée à la colonne (11, 12) d'ossature par des moyens comprenant des moyens d'articulation (121, 122) verrouillables en position dans au moins une position d'utilisation dans laquelle la potence est déployée et une position dans laquelle elle est repliée parallèlement à la colonne d'ossature.

7. Véhicule selon l'une quelconque des revendications 5 et 6, **caractérisé en ce que** les branches (52) sont reliées à la potence (51) par des moyens d'articulation (54) verrouillables en position dans au moins une position d'utilisation dans laquelle elles sont déployées et une position dans laquelle elles sont repliées contre la potence.

8. Véhicule selon l'une quelconque des revendications 1 à 7, **caractérisé en ce que** l'ossature (1) comporte une plaque repose-pieds (133).

9. Véhicule selon l'une quelconque des revendications 1 à 8, **caractérisé en ce qu'**il comporte une roue avant directrice (2) et une roue arrière (3).

10. Véhicule selon l'une quelconque des revendications 1 à 9, **caractérisé en ce qu'**il comporte des moyens supports de charges (134) pour supporter en outre une charge à transporter.

11. Véhicule selon l'une quelconque des revendications 1 à 10, **caractérisé en ce qu'**il comporte un dispositif d'affichage (135) comprenant au moins un panneau d'affichage.

## Patentansprüche

1. Radfahrzeug, das so beschaffen ist, dass es durch eine Fußbetätigung eines Benutzers bewegt werden kann, die einer Marsch- oder Laufbewegung der Füße des Benutzers auf dem Boden ähnelt, umfassend zwei Räder (2, 3), wovon wenigstens eines orientierbar ist, um als richtungsgebendes Rad zu dienen, einen Abstützsattel (4) für den Benutzer, ein einziges Handorgan (5) für die Richtungssteuerung, das durch eine unechte Lenkstange gebildet ist, und eine Tragkonstruktion, die einen Längsträger (13), der an den Rädern montiert ist, und eine den Sattel tragende Säule (11, 12) aufweist, wobei das Fahrzeug **dadurch gekennzeichnet ist, dass** die den Sattel tragende Säule (11, 12) auch die unechte Lenkstange trägt und zu dem Längsträger (13) geklappt werden kann.

2. Fahrzeug nach Anspruch 1, **dadurch gekennzeichnet, dass** sich das richtungsgebende Rad (2) um eine Achse (A), deren Schnittpunkt mit dem Boden sich vor der Kontaktzone des Rades (2) mit dem Boden befindet, orientieren kann, was ermöglicht, die Orientierung des Rades durch transversale Neigung des Fahrzeugs beispielsweise mittels der unechten Lenkstange (5) zu verändern.

3. Fahrzeug nach einem der Ansprüche 1 und 2, **dadurch gekennzeichnet, dass** sich das richtungsgebende Rad (2) um eine Achse (A), die nach hinten geneigt ist und in der Weise zum Boden verläuft, dass das Rad (2) bestrebt ist, sich von selbst wieder auf den Längsträger (13) auszurichten, frei orientieren kann, wobei durch die Rückkehr in diese ausgerichtete Position das vordere Ende des Fahrzeugs bestrebt ist abzusinken.

4. Fahrzeug nach einem der Ansprüche 1 bis 3, **dadurch gekennzeichnet, dass** die Säule (11, 12) der Tragkonstruktion, die den Sattel (4) und die unechte Lenkstange (5) trägt, mit dem Längsträger durch Gelenkmittel (131, 132) befestigt ist, die wenigstens in einer Nutzungsstellung, in der die Säule ausgeklappt ist, und in einer Stellung, in der sie angenähert parallel zu dem Längsträger umgeklappt ist, verriegelbar sind.

5. Fahrzeug nach einem der Ansprüche 1 bis 4, **dadurch gekennzeichnet, dass** die unechte Lenkstange (5) einen Arm (51) aufweist, der sich zur Vorderseite des Fahrzeugs erstreckt und zwei Schenkel (52) trägt, die sich beiderseits des Arms quer erstrecken.

6. Fahrzeug nach Anspruch 5, **dadurch gekennzeichnet, dass** der Arm (51) mit der Säule (11, 12) der Tragkonstruktion durch Mittel verbunden ist, die Gelenkmittel (121, 122) aufweisen, die wenigstens in einer Nutzungsstellung, in der der Arm ausgeklappt ist, und in einer Stellung, in der er zusammengeklappt und zu der Tragkonstruktionssäule parallel ist, verriegelbar sind.

7. Fahrzeug nach einem der Ansprüche 5 und 6, **dadurch gekennzeichnet, dass** die Schenkel (52) mit dem Arm (51) über Gelenkmittel (54) verbunden sind, die wenigstens in einer Nutzungsstellung, in der sie ausgeklappt sind, und in einer Stellung, in der sie gegen den Arm zusammengeklappt sind, verriegelbar sind.

8. Fahrzeug nach einem der Ansprüche 1 bis 7, **dadurch gekennzeichnet, dass** die Tragkonstruktion (1) eine Fußauflageplatte (133) umfasst.

9. Fahrzeug nach einem der Ansprüche 1 bis 8, **dadurch gekennzeichnet, dass** es ein richtungsgebendes Vorderrad (2) und ein Hinterrad (3) umfasst.

10. Fahrzeug nach einem der Ansprüche 1 bis 9, **dadurch gekennzeichnet, dass** es Lasttragemittel (134) umfasst, um außerdem eine zu transportierende Last zu tragen.

11. Fahrzeug nach einem der Ansprüche 1 bis 10, **dadurch gekennzeichnet, dass** es eine Anzeigevorrichtung (135) umfasst, die wenigstens eine Anzeigetafel aufweist.

## Claims

1. Wheeled vehicle adapted in order to be moved by means of the action of the user's feet similar to the movement whereby the user walks or runs along the ground, comprising two wheels (2, 3) at least one of which can be adjusted in order to be steered, a support saddle (4) for the user, a single manual steering control element (5) constituted by false handlebars, and a framework comprising a member (13) mounted on the wheels and a column (11, 12) carrying the saddle, a vehicle **characterised in that** the column (11, 12) carrying the saddle also carries the false handlebars and can be folded up against the member (13).

2. The vehicle in accordance with claim 1, **characterised in that** the steered wheel (2) is free to move around an axis (A) whose intersection with the ground is located in front of the wheel's contact zone (2) with the latter, which allows the direction of the wheel to be changed by transversal inclination of the vehicle using for example the false handlebars (5).

3. The vehicle in accordance with any one of claims 1 and 2, **characterised in that** the steered wheel (2) is free to move around an axis (A) inclined backwards as it goes towards the ground so that the wheel (2) tends to come back of its own accord into alignment with the member (13), with the return into this position of alignment tending to lower the front of the vehicle.

4. Vehicle in accordance with any one of claims 1 to 3, **characterised in that** the framework coiumn (11, 12) carrying the saddle (4) and the false handlebars (5) is integral with the member by hinged means (131, 132) which can be locked into position in at least one position of use in which the column is opened out and one position in which it is folded approximately in parallel with the member.

5. The vehicle in accordance with any one of claims 1 to 4, **characterised in that** the false handlebars (5) have a arm (51) extending towards the front of the vehicle and having two handles (52) extending laterally on either side of the arm.

6. Vehicle in accordance with claim 5, **characterised in that** the arm (51) is integral with the framework column (11, 12) using means comprising hinged means (121, 122) which can be locked into position in at least one position of use in which the arm is opened out and one position in which it is folded in parallel to the framework column.

7. Vehicle in accordance with the any one of claims 5 and 6, **characterised in that** the handles (52) are connected to the arm (51) by hinged means (54) which can be locked into position in at least one position of use in which they are opened out and one position in which they are folded against the arm.

8. Vehicle in accordance with any one of claims 1 to 7, **characterised in that** the framework (1) has a foot rest plate (133).

9. Vehicle in accordance with any one of claims 1 to 8, **characterised in that** it has a front steered wheel (2) and a rear wheel (3).

10. Vehicle in accordance with any one of claims 1 to 9, **characterised in that** it has means for supporting loads (134) to additionally support a load to be transported.

11. Vehicle in accordance with any one of claims 1 to 10, **characterised in that** it has a dispiay device (135) comprising at least one notice board.
